# EUROPEAN PATENT APPLICATION

(11) **EP 3 590 729 A1**
(43) Date of publication of application: **08.01.2020**
(21) Application number: 19155033.4
(22) Date of filing: 01.02.2019
(51) Int. Cl.: B60B 3/04, B60B 23/10, B64C 25/36

(54) **WHEEL ASSEMBLY WITH ALIGNMENT PINS**

(30) Priority: 02.02.2018 US 201815887778
(71) Applicant: Goodrich Corporation, Charlotte, NC 28217-4578 (US)
(72) Inventor: HERRMANN, Nathaniel John, Springfield, OH Ohio 45502 (US); CAMPBELL, Steven C, Tipp City, OH Ohio 45371 (US)
(74) Representative: Dehns

(57) **Abstract**

A wheel assembly (401) may comprise an inboard wheel half (400) and an outboard wheel half (402). The inboard wheel half (400) may include a flange (412). The flange (412) may define a first alignment pin opening (422). The outboard wheel half (402) may define a second alignment pin opening (452). An alignment pin (430) may be located in the first alignment pin opening (422) and the second alignment pin opening (452).

## Description

### FIELD

The present disclosure relates to aircraft wheel assemblies and, in particular, to a wheel assembly having an alignment pin.

### BACKGROUND

Aircraft typically include landing gear for supporting the aircraft above a ground surface and for allowing the aircraft to move relative to the ground surface while remaining supported by the ground surface. The landing gear may include one or more split wheel assemblies having an inboard portion and an outboard portion, which define a tubewell. The outboard portion may be secured to the inboard portion via a plurality of bolted joints (e.g., nuts engaging bolts). Loosening of one or more of the bolted joints can result in a rupture of the tubewell. Bolted joints tend to be more prone to loosen when lateral loads are applied to the joint after it is tightened. Movement of the wheel assembly outboard and inboard portions relative to one another can generate these lateral loads. Accordingly, it may be desirable to restrict movement of outboard and inboard portions relative to one another.

### SUMMARY

A wheel assembly is disclosed herein, in accordance with various embodiments. The wheel assembly may comprise an inboard wheel half including a flange. The flange may define a first alignment pin opening. An outboard wheel half may define a second alignment pin opening. The first alignment pin opening and the second alignment pin opening define a volume configured to receive an alignment pin.

In various embodiments, the alignment pin may be located in the first alignment pin opening and the second alignment pin opening. In various embodiments, an axial length of the alignment pin may be between 45% and 80% of an axial length extending from an inboard surface of the flange to an outboard surface of the outboard wheel half.

In various embodiments, a first end of the alignment pin may be press fit into at least one of the flange or the outboard wheel half. A second end of the alignment pin opposite the first end of the alignment pin may be slip fit into at least one of the flange or the outboard wheel half.

In various embodiments, a torque bar may be coupled to the inboard wheel half. An end of the torque bar may be located in the first alignment pin opening. In various embodiments, at least one of the first alignment pin opening or the second alignment pin opening may be a blind alignment pin opening. In various embodiments, at least one of the first alignment pin opening or the second alignment pin opening may be a stepped alignment pin opening.

In various embodiments, a fastener may couple the inboard wheel half to the outboard wheel half. The fastener may comprise a bolt extending through the flange and the outboard wheel half, and a nut engaging the bolt.

Also disclosed herein, a wheel assembly for an aircraft may comprise an inboard wheel half including a flange. The flange may define a first alignment pin opening. An outboard wheel half may define a second alignment pin opening. An alignment pin may be located in the first alignment pin opening and the second alignment pin opening. An axial length of the alignment pin may be equal to or less than an axial length extending from an inboard surface of the flange to an outboard surface of the outboard wheel half A fastener may be located through the flange and the outboard wheel half.

In various embodiments, the first alignment pin opening may extend from the inboard surface of the flange to an outboard surface of the flange opposite the inboard surface of the flange. In various embodiments, at least one of the first alignment pin opening or the second alignment pin opening may be a blind alignment pin opening. In various embodiments, at least one of the first alignment pin opening or the second alignment pin opening may be a stepped alignment pin opening.

In various embodiments, a torque bar may be coupled to the inboard wheel half. The alignment pin may be axially aligned with the torque bar. In various embodiments, the fastener comprises a bolt and a nut engaging the bold.

Also disclosed herein, a wheel assembly for an aircraft may comprise at least one of an inboard wheel half or an outboard wheel half. An alignment pin opening may be defined by the at least one of the inboard wheel half or the outboard wheel half. A first fastener opening may be circumferentially adjacent to the alignment pin opening and defined by the at least one of the inboard wheel half or the outboard wheel half. A second fastener opening may be circumferentially adjacent to the first fastener opening and defined by the at least one of the inboard wheel half or the outboard wheel half. A circumferential distance between the alignment pin opening the first fastener opening may be less than a circumferential distance between the first fastener opening and the second fastener opening.

In various embodiment, the alignment pin opening may be at least one of a blind alignment pin opening or a stepped alignment pin opening. In various embodiment, an alignment pin may be press fit into the at least one of the inboard wheel half or the outboard wheel half. In various embodiment, the wheel assembly may further comprise a torque bar. An end of the torque bar may be located within the alignment pin opening.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1A illustrates an aircraft having multiple landing gear, in accordance with various embodiments;
FIG. 1B illustrates a wheel assembly of an aircraft landing gear, in accordance with various embodiments;
FIG. 2A illustrates an inboard wheel half of the wheel assembly of FIG. 1B, in accordance with various embodiments;
FIG. 2B illustrates an enlarged view of a portion of the inboard wheel half of FIG. 2A, in accordance with various embodiments
FIG. 2C illustrates an outboard half of the wheel assembly of FIG. 1B, in accordance with various embodiments;
FIG. 2D illustrates a cross-sectional view of a portion of the wheel assembly of FIG. 1B taken along the line 2D-2D in FIG. 1B, in accordance with various embodiments;
FIG. 2E illustrates an enlarged view of a portion of the cross-sectional view of the wheel assembly of FIG. 2D; in accordance with various embodiments;
FIGs. 3A and 3B illustrate cross-sectional views of a wheel assembly having blind alignment pin openings, in accordance with various embodiments;
FIGs. 4A and 4B illustrate cross-sectional views of a wheel assembly having stepped alignment pin openings, in accordance with various embodiments; and
FIGs. 5A and 5B illustrate, respectively, a perspective view and a cross-sectional view of a wheel assembly having torque bar alignment pin openings, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein without departing from the spirit and scope of the disclosure. Thus, the detailed description herein is presented for purposes of illustration only and not of limitation.

Surface cross hatching lines may be used throughout the figures to denote different parts but not necessarily to denote the same or different materials. Throughout the present disclosure, like reference numbers denote like elements. Accordingly, elements with like element numbering may be shown in the figures, but may not be necessarily repeated herein for the sake of clarity.

As used herein, a first component that is "radially outward" of a second component means that the first component is positioned at a greater distance away from a common axis than the second component. A first component that is "radially inward" of a second component means that the first component is positioned closer to the common axis than the second component. In the case of components that rotate circumferentially about a common axis, a first component that is radially inward of a second component rotates through a circumferentially shorter path than the second component. As used herein, "distal" refers to the direction outward, or generally, away from a reference component. As used herein, "proximal" and/or "proximate" refer(s) to a direction inward, or generally, towards the reference component.

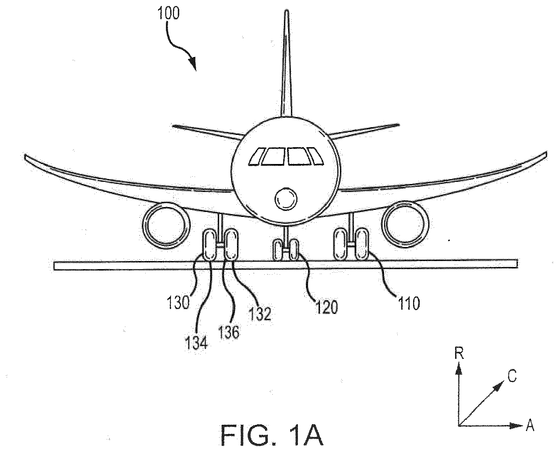

With reference to FIG. 1A, an aircraft 100 in accordance with various embodiments can include multiple landing gear including a first landing gear 110, a second landing gear 120 and a third landing gear 130. Each landing gear may include one or more wheel assemblies. For example, third landing gear 130 includes an inner wheel assembly 132 and an outer wheel assembly 134. Each wheel assembly of the aircraft 100 may be designed to receive a tire. For example, a tire 136 may be placed about an outer circumference of inner wheel assembly 132 and inflated. An A-R-C axis is shown in various drawings to illustrate the axial, radial and circumferential directions relative to inner wheel assembly 132. The A, or axial, direction corresponds to an axis of rotation of inner wheel assembly 132. The R, or radial, direction corresponds to a direction of a radius of inner wheel assembly 132. The C, or circumferential, direction corresponds to a direction of the circumference of inner wheel assembly 132.

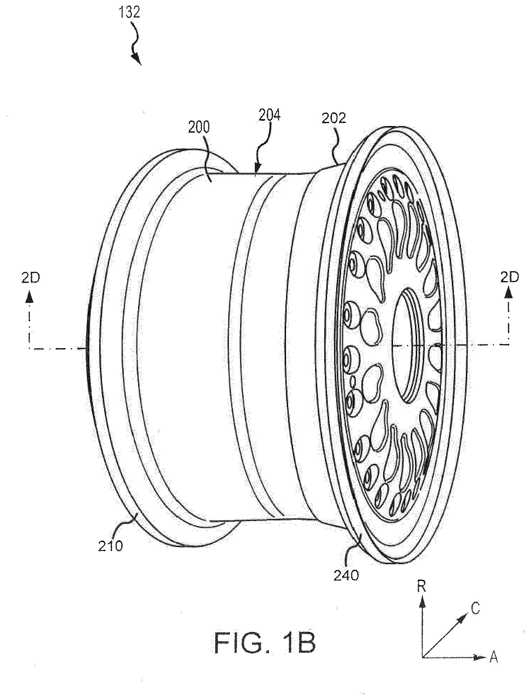

Turning to FIG. 1B, inner wheel assembly 132 includes an inboard wheel half 200 and an outboard wheel half 202. Although inner wheel assembly 132 is utilized in an aircraft, one skilled in the art will realize that a similar wheel assembly may be used in other vehicles such as cars or motorcycles. Further, while FIGs. 1A and 1B describe features of inner wheel assembly 132 of third landing gear 130, it should be understood that outer wheel assembly 134 and/or the wheel assemblies of first landing gear 110 and second landing gear 120 may include the elements and functionalities as described herein with respect to inner wheel assembly 132.

Inner wheel assembly 132 also includes a tubewell 204. Tubewell 204 is defined by inboard wheel half 200 and outboard wheel half 202. Tubewell 204 may receive tire 136, with momentary reference to FIG. 1A, and may form a seal with tire 136 to allow pressurized air to inflate the tire.

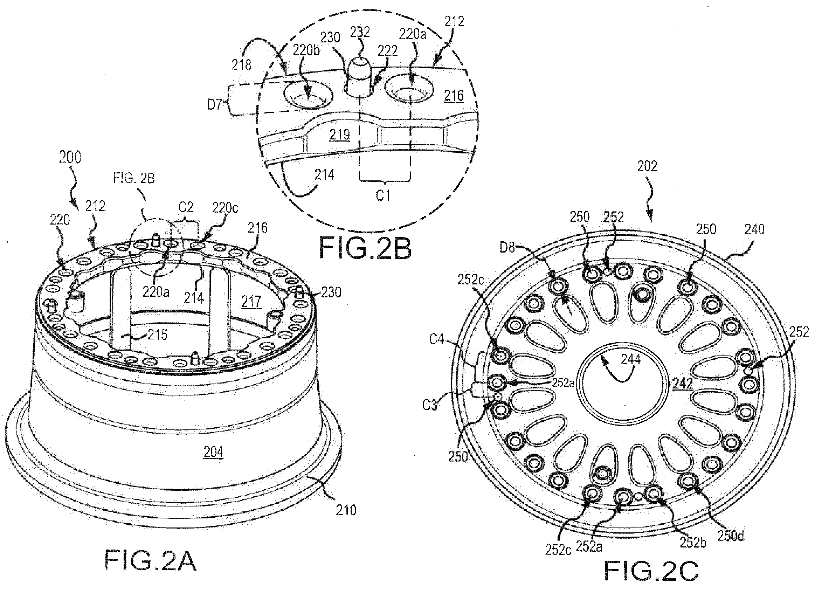

Turning to FIGs. 2A and 2B, a perspective view of inboard wheel half 200 is shown, in accordance with various embodiments. With combined reference to FIGs. 1B, 2A, and 2B, inboard wheel half 200 includes a radially outward extending lip or rim 210 and a radially inward extending lip or flange 212. Rim 210 is located at an inboard end of inboard wheel half 200. Flange 212 is located at an outboard end of inboard wheel half 200. Stated differently, rim 210 is distal to outboard wheel half 202, and flange 212 is proximate to outboard wheel half 202. A plurality of torque bars 215 may be located circumferentially along a radially inward surface 217 of inboard wheel half 200. Torque bars 215 may extend between, and be secured to, flange 212 and the inboard end of inboard wheel half 200.

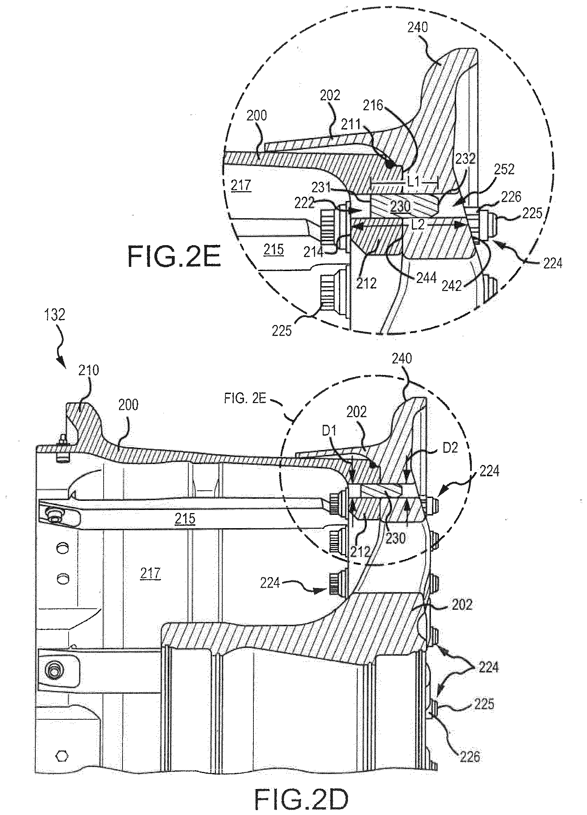

Flange 212 includes an inboard surface 214, an outboard surface 216 opposite inboard surface 214, a radially outward surface 218, and a radially inward surface 219 opposite radially outward surface 218. In various embodiments, with momentary reference to FIG. 2E, a seal 211, for example an O-ring, may be located around radially outward surface 218 and may seal a space between inboard wheel half 200 and outboard wheel half 202.

With reference to FIGs. 2A and 2B, flange 212 defines a plurality of fastener openings 220 and a plurality of alignment pin openings 222. With combined reference to FIGs. 2A, 2B, and 2D, fastener openings 220 may each be configured to receive a fastener 224. Fastener 224 may be configured to secure outboard wheel half 202 to inboard wheel half 200 and prevent and/or reduce axial movement of the wheel halves relative to one another. Alignment pin openings 222 may each be configured to receive an alignment pin 230. Alignment pin 230 may be configured to reduce and/or prevent lateral sliding/movement of the wheel halves relative to one another. As used herein, a "fastener opening" refers to an opening that receives a fastener or other securement mechanism that tends to reduce and/or prevent axial movement of the wheel halves, and a "alignment pin opening" refers to an opening that receives a pin or other structure that tends to reduce and/or prevent lateral movement of the wheel halves and allow axial movement of the wheel halves.

Alignment pin openings 222 may extend completely through flange 212, such that alignment pin openings 222 extend from inboard surface 214 to outboard surface 216. Alignment pin opening 222 is configured to receive an inboard end 231 of alignment pin 230, with momentary reference to FIG. 2E. In various embodiments, alignment pin opening 222 may be configured (e.g., a diameter of alignment pin opening 222 may be selected) such that alignment pin 230 may be press fit into flange 212. In this regard, frictional force may secure alignment pin 230 to flange 212.

In various embodiments, alignment pin openings 222 may be located circumferentially between fastener openings 220 such that each alignment pin opening 222 has a fastener opening 220a that is circumferentially adjacent in a clockwise direction and a fastener opening 220b that is circumferentially adjacent in a counter clockwise direction. Stated differently, alignment pin opening 222 is circumferentially adjacent to fastener opening 220a and fastener opening 220b. Fastener opening 220a is circumferentially adjacent to alignment pin opening 222 and fastener opening 220c. In various embodiments, a distance C1, as measured circumferentially, between a center axis of alignment pin opening 222 and a center axis of fastener opening 220a (i.e., a center axis of the fastener opening that is circumferentially adjacent to alignment pin opening 222) is less than a distance C2, as measured circumferentially, between the center axis of fastener opening 220a and a center axis of fastener opening 220c (i.e., a center axis of the fastener opening that is circumferentially adjacent to fastener opening 220a).

Referring to FIG. 2C, outboard wheel half 202 is illustrated, in accordance with various embodiments. With combined reference to FIGs. 1B and 2C, outboard wheel half 202 includes a radially outward extending lip or rim 240. Rim 240 is located at an outboard end of outboard wheel half 202. Outboard wheel half includes an outboard surface 242 and an inboard surface 244 opposite outboard surface 242. Inboard surface 244 is oriented toward outboard surface 216 of inboard wheel half 200, with momentary reference to FIG. 2A, when outboard wheel half 202 is secured to inboard wheel half 200. Outboard wheel half 202 defines a plurality of fastener openings 250 and a plurality of alignment pin openings 252.

Fastener openings 222 may be distributed substantially equally along flange 212. As used in this context only, "substantially equally" means that the distances between any two fastener openings 222 are with +/- 5% of one another. Fastener openings 222 may be either distributed symmetrically or asymmetrically about flange 212. Fastener openings 252 may be distributed substantially equally along outboard wheel half 202. As used in this context only, "substantially equally" means that the distances between any two fastener openings 252 are with +/- 5% of one another. Fastener openings 252 may be either distributed symmetrically or asymmetrically about outboard wheel half 202.

In various embodiments, alignment pin openings 252 may be located between fastener openings 250 such that each alignment pin opening 252 has a fastener opening 250a that is circumferentially adjacent in a clockwise direction and a fastener opening 220b that is circumferentially adjacent in a counter clockwise direction. Stated differently, alignment pin opening 252 is circumferentially adjacent to fastener opening 250a and fastener opening 250b. Fastener opening 250a is circumferentially adjacent to alignment pin opening 252 and fastener opening 250c. Fastener opening 250b is circumferentially adjacent to alignment pin opening 252 and fastener opening 250d. A distance C3, as measured circumferentially, between a center axis of an alignment pin opening 252 and a center axis of the fastener opening 250 that is circumferentially adjacent to the alignment pin opening 252 (e.g., fastener opening 250a or fastener opening 250b) may be less than a distance C4, as measured circumferentially, between the center axes of circumferentially adjacent fastener openings (e.g., less than the circumferential distance between fastener opening 250a and fastener opening 250c, or the circumferential distance between fastener opening 250b and fastener opening 250d).

FIGs. 2D and 2E illustrate a cross-sectional view of a portion of inner wheel assembly 132 with outboard wheel half 202 secured to inboard wheel half 200, in accordance with various embodiments. Fastener openings 250 in outboard wheel half 202 are configured to axially align with fastener openings 220 in inboard wheel half 200. Fastener openings 220 and 250 receive fastener 224. Fastener 224 secures outboard wheel half 202 to inboard wheel half 200. In various embodiments, fastener 224 includes a bolt 225 extending through flange 212 and outboard wheel half 202, and a nut 226 engaging bolt 225. While fastener 224 is illustrated as including bolt 225 and nut 226, it should be understood that fastener 224 may include a rivet, pin, clip, screw, or any other suitable securement mechanism.

Alignment pin openings 252 are configured to axially align with alignment pin openings 222 in inboard wheel half 200 and to receive an outboard end 232 of an alignment pin 230. In this regard, alignment pin opening 252 and alignment pin opening 222 together define a volume configured to receive alignment pin 230.

Alignment pin openings 252 may extend completely through outboard wheel half 202, such that alignment pin openings 252 extend from inboard surface 244 to outboard surface 242. In various embodiments, alignment pin opening 252 may be configured (e.g., a diameter of alignment pin opening 252 may be selected) such that alignment pin 230 may be slip fit into outboard wheel half 202. In this regard, alignment pin 230 may be in contact with the surface defining alignment pin opening 252, but the frictional force between outboard wheel half 202 and alignment pin 230 may be reduced as compared to the frictional force between flange 212 and alignment pin 230, thereby allowing alignment pin 230 to slide in and out alignment pin opening 252. In various embodiments, outboard end 232 of alignment pin 230 may be press fit in outboard wheel half 202 and inboard end 231 may be slip fit in flange 212. In various embodiments, the end of alignment pin 230 that is to be slip fit (e.g., outboard end 232 in FIG. 2E) may be sloped or have a frustoconical shape.

With combined reference to FIGs. 2A, 2D, and 2E, in various embodiments, inner wheel assembly 132 may comprise between two and eight alignment pins 230 spaced circumferentially along flange 212. In various embodiments, inner wheel assembly 132 may comprise between two and six alignment pins 230 spaced circumferentially along flange 212. An axial length L1 of alignment pins 230 may be equal to or less than an axial length L2 extending between inboard surface 214 of flange 212 and outboard surface 242 of outboard wheel half 202. In various embodiments, L1 may be between 30% and 100% of L2. In various embodiments, L1 may be between 45% and 80% of L2. In various embodiments, L1 may be between 50% and 80% of L2.

In various embodiments, alignment pin opening 222 comprises a generally consistent diameter D1 and/or cross-sectional area and/or cross-sectional geometry. Stated differently, the diameter D1 and/or cross-sectional area and/or cross-sectional geometry of alignment pin opening 222 proximate inboard surface 214 may be equal to the diameter D1 and/or the cross-sectional area and/or the cross-sectional geometry of alignment pin opening 222 proximate outboard surface 216. Diameter D1 may be less than, equal to, or greater than a diameter D7 of fastener openings 220, with momentary reference to FIG. 2B.

Alignment pin opening 252 in outboard wheel half 202 comprises a generally consistent diameter D2 and/or cross-sectional area and/or cross-sectional geometry. Stated differently, the diameter D2 and/or cross-sectional area and/or cross-sectional geometry of alignment pin opening 252 proximate inboard surface 244 may be equal to the diameter D2 and/or the cross-section area and/or the cross-sectional geometry of alignment pin opening 252 proximate outboard surface 242. Diameter D2 may be less than, equal to, or greater than a diameter D8 of fastener openings 250, with momentary reference to FIG. 2C.

When outboard wheel half 202 is secured to inboard wheel half 200, alignment pins 230 engage inboard wheel half 200 and outboard wheel half 202. Alignment pins 230 engaging both inboard wheel half 200 and outboard wheel half 202 may prevent or reduce lateral sliding/movement of the wheel halves relative to one another. In this regard, alignment pins 230 tend to reduce fastener joint movement and/or a loosening of nuts 226 and bolts 225.

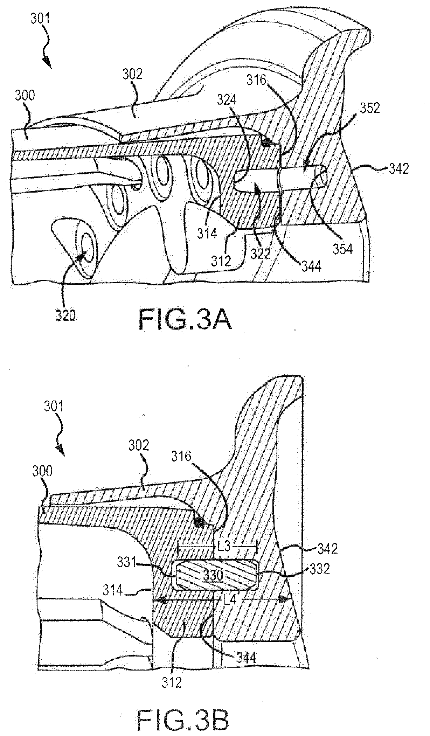

With reference to FIGs. 3A and 3B, a wheel assembly 301 having blind alignment pin openings is illustrated, in accordance with various embodiments. Wheel assembly 301 includes an inboard wheel half 300 and an outboard wheel half 302 which are similar, respectively, to inboard wheel half 200 and outboard wheel half 202 of inner wheel assembly 132 in FIG. 1B. Inboard wheel half 300 includes a radially inward extending flange 312. Flange 312 is located at an outboard end of inboard wheel half 300 and proximate to outboard wheel half 302.

Flange 312 includes an inboard surface 314 and an outboard surface 316 opposite inboard surface 314. Flange 312 defines a plurality of fastener openings 320 and a plurality of blind alignment pin openings 322. Fastener openings 320 may each be configured to receive a fastener similar to fastener 224 of inner wheel assembly 132 in FIG. 2D (fasteners have been omitted from FIGs. 3A and 3B for the sake of clarity). Blind alignment pin openings 322 may extend partially through flange 312, such that a portion of flange 312 remains between an axial surface 324 defining blind alignment pin openings 322 and inboard surface 314 of flange 312. Blind alignment pin opening 322 is configured to receive an inboard end 331 of an alignment pin 330. In various embodiments, blind alignment pin opening 322 may be configured (e.g., a diameter of blind alignment pin opening 322 may be selected) such that alignment pin 330 may be press fit into flange 312. In this regard, frictional force may secure alignment pin 330 to flange 312.

Outboard wheel half 302 includes an outboard surface 342 and an inboard surface 344 opposite outboard surface 342. Inboard surface 344 is oriented toward outboard surface 316 of inboard wheel half 300, when outboard wheel half 302 is secured to inboard wheel half 300. Outboard wheel half 302 defines a plurality of fastener openings (similar to fastener openings 250, in FIG. 2C) configured to axially align with fastener openings 320 in inboard wheel half 300. Outboard wheel half 302 also defines a plurality of blind alignment pin openings 352. Blind alignment pin openings 352 are configured to axially align with blind alignment pin openings 322 in inboard wheel half 300 and to receive an outboard end 332 of an alignment pin 330. In this regard, blind alignment pin opening 352 and blind alignment pin opening 322 together define a volume configured to receive alignment pin 330.

Blind alignment pin openings 352 may extend partially through outboard wheel half 302, such that a portion of outboard wheel half 302 remains between an axial surface 354 defining blind alignment pin openings 352 and outboard surface 342 of outboard wheel half 302. In various embodiments, blind alignment pin opening 352 may be configured (e.g., a diameter of blind alignment pin opening 352 may be selected) such that alignment pin 330 may be slip fit into outboard wheel half 302. In this regard, alignment pin 330 may be in contact with the surface defining blind alignment pin opening 352, but the frictional force between outboard wheel half 302 and alignment pin 330 may be reduced as compared to the frictional force between flange 312 and alignment pin 330, thereby allowing alignment pin 330 to slide in and out blind alignment pin opening 352. In various embodiments, outboard end 332 of alignment pin 330 may be press fit in outboard wheel half 302 and inboard end 331 may be slip fit in flange 312.

An axial length L3 of alignment pin 330 may be between 30% and 90% of an axial length L4 extending between inboard surface 314 of flange 312 and outboard surface 342 of outboard wheel half 302. In various embodiments, L3 may be between 45% and 80% of L4. In various embodiments, L3 may be between 50% and 80% of L4. In various embodiments, the axial length L3 of alignment pin 330 may be approximately equal to the combined axial length of blind alignment pin opening 322 and blind alignment pin opening 352. As used in this context only, "approximately equal" means length L3 is within 5% of the combined axial length of blind alignment pin opening 322 and blind alignment pin opening 352. When outboard wheel half 302 is secured to inboard wheel half 300, alignment pins 330 engage inboard wheel half 300 and outboard wheel half 302. Alignment pins 330 engaging both inboard wheel half 300 and outboard wheel half 302 may prevent or reduce lateral sliding/movement of the wheel halves relative to one another. In this regard, alignment pins 330 tend to reduce fastener joint movement and/or a loosening of nuts and bolts.

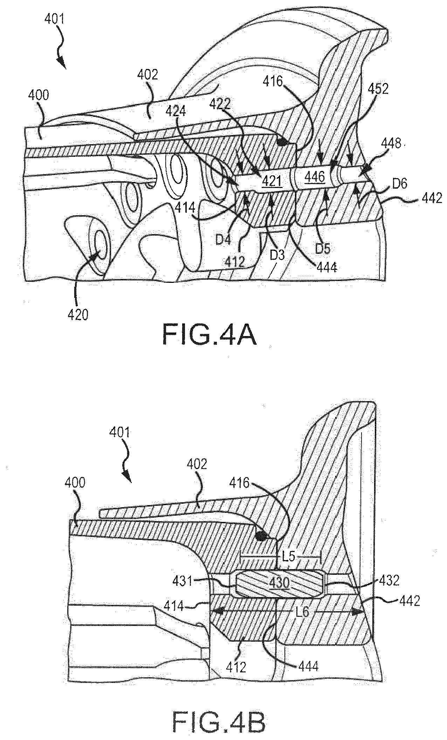

With reference to FIGs. 4A and 4B, a wheel assembly 401 having stepped alignment pin openings is illustrated, in accordance with various embodiments. Wheel assembly 401 includes an inboard wheel half 400 and an outboard wheel half 402 which are similar, respectively, to inboard wheel half 200 and outboard wheel half 202 of inner wheel assembly 132 in FIG. 1B. Inboard wheel half 400 includes a radially inward extending flange 412. Flange 412 is located at an outboard end of inboard wheel half 400 and proximate to outboard wheel half 402.

Flange 412 includes an inboard surface 414 and an outboard surface 416 opposite inboard surface 414. Flange 412 defines a plurality of fastener openings 420 and a plurality of stepped alignment pin openings 422. Fastener openings 420 may each be configured to receive a fastener similar to fastener 224 of inner wheel assembly 132 in FIG. 2D (fasteners have been omitted from FIGs. 4A and 4B for the sake of clarity). Stepped alignment pin openings 422 may extend completely through flange 412, such that stepped alignment pin openings 422 extend from inboard surface 414 to outboard surface 416 of flange 412. A first portion 421 of stepped alignment pin openings 422, proximate outboard surface 416, includes a diameter D3 which is greater than a diameter D4 of a second portion 424 of stepped alignment pin openings 422 this is proximate inboard surface 414. First portion 421 of stepped alignment pin opening 422, which includes diameter D3, is configured to receive an inboard end 431 of an alignment pin 430. In various embodiments, first portion 421 of stepped alignment pin opening 422 may be configured (e.g., diameter D3 may be selected) such that alignment pin 430 may be press fit into flange 412. In this regard, frictional force may secure alignment pin 430 to flange 412. The diameter D4 of second portion 424 may be less than a diameter of alignment pin 430.

Outboard wheel half 402 includes an outboard surface 442 and an inboard surface 444 opposite outboard surface 442. Inboard surface 444 is oriented toward outboard surface 416 of inboard wheel half 400, when outboard wheel half 402 is secured to inboard wheel half 400. Outboard wheel half 402 defines a plurality of fastener openings (similar to fastener openings 250 in FIG. 2C) configured to axially align with fastener openings 420 in inboard wheel half 400. Outboard wheel half 402 also defines a plurality of stepped alignment pin openings 452. Stepped alignment pin openings 452 are configured to axially align with stepped alignment pin openings 422 in inboard wheel half 400 and to receive an outboard end 432 of alignment pin 430. In this regard, stepped alignment pin opening 452 and stepped alignment pin opening 422 together define a volume configured to receive alignment pin 430.

Stepped alignment pin openings 452 may extend completely through outboard wheel half 402, such that stepped alignment pin openings 452 extend from outboard surface 442 to inboard surface 444. A first portion 446 of stepped alignment pin openings 452, proximate inboard surface 444, includes a diameter D5 which is greater than a diameter D6 of a second portion 448 of stepped alignment pin openings 452 that is proximate outboard surface 442. First portion 446 of stepped alignment pin opening 452, which includes diameter D5, is configured to receive outboard end 432 of an alignment pin 430. The diameter D6 of second portion 448 may be less than a diameter of alignment pin 430.

In various embodiments, first portion 446 of stepped alignment pin opening 452 may be configured (e.g., diameter D5 may be selected) such that alignment pin 430 may be slip fit into outboard wheel half 402. In this regard, alignment pin 430 may be in contact with the surface defining first portion 446 of stepped alignment pin opening 452, but the frictional force between outboard wheel half 402 and alignment pin 430 may be less than the frictional force between flange 412 and alignment pin 430, thereby allowing alignment pin 430 to slide in and out first portion 446 of stepped alignment pin opening 452. In various embodiments, outboard end 432 of alignment pin 430 may be press fit in outboard wheel half 402 and inboard end 431 may be slip fit in flange 412.

An axial length L5 of alignment pin 430 may be between 30% and 90% of an axial length L6 extending between inboard surface 414 of flange 412 and outboard surface 442 of outboard wheel half 402. In various embodiments, L5 may be between 45% and 80% of L6. In various embodiments, L5 may be between 50% and 80% of L6. In various embodiments, the axial length L5 of alignment pin 430 may be approximately equal to the combined axial length of first portion 421 of stepped alignment pin opening 422 and first portion 446 of stepped alignment pin opening 452. As used in this context only, "approximately equal" means length L5 is within 5% of the combined axial length of first portion 421 of stepped alignment pin opening 422 and first portion 446 of stepped alignment pin opening 452. Second portion 424 of stepped alignment pin opening 422 and/or second portion 448 of stepped alignment pin opening 452 may allow for moisture drainage, which tends to reduce or mitigate corrosion. When outboard wheel half 402 is secured to inboard wheel half 400, alignment pins 430 engage inboard wheel half 400 and outboard wheel half 402. Alignment pins 430 engaging both inboard wheel half 400 and outboard wheel half 402 may prevent or reduce lateral sliding/movement of the wheel halves relative to one another. In this regard, alignment pins 430 tend to reduce fastener joint movement and/or a loosening of nuts and bolts.

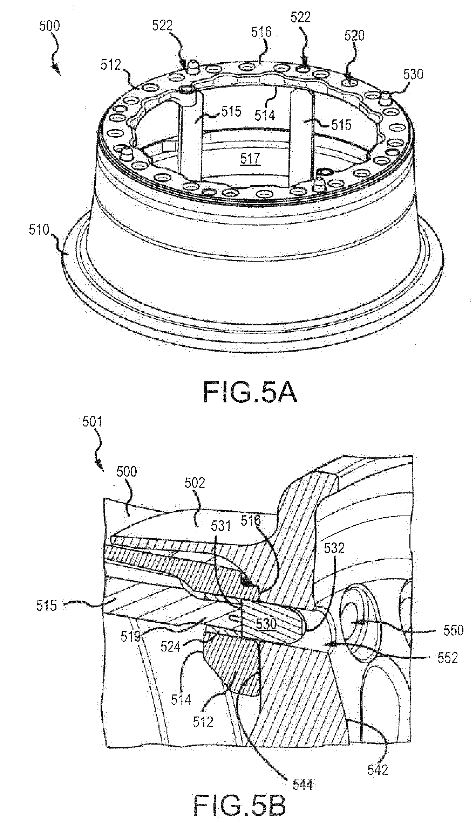

With reference to FIGs. 5A and 5B, a wheel assembly 501 having torque bar alignment pin openings is illustrated, in accordance with various embodiments. Wheel assembly 501 includes an inboard wheel half 500 and an outboard wheel half 502 which are similar, respectively, to inboard wheel half 200 and outboard wheel half 202 of inner wheel assembly 132 in FIG. 1B. Inboard wheel half 500 includes a radially outward extending lip or rim 510 and a radially inward extending lip or flange 512. Rim 510 is located at an inboard end of inboard wheel half 500. Flange 512 is located at an outboard end of inboard wheel half 500. A plurality of torque bars 515 may be located circumferentially along a radially inward surface 517 of inboard wheel half 500.

Flange 512 includes an inboard surface 514 and an outboard surface 516 opposite inboard surface 514. Flange 512 defines a plurality of fastener openings 520 and a plurality of torque bar alignment pin openings 522. Fastener openings 520 may each be configured to receive a fastener similar to fastener 224 of inner wheel assembly 132 in FIG. 2D (fasteners have been omitted from FIGs. 5A and 5B for the sake of clarity). Torque bar alignment pin openings 522 may extend completely through flange 512, such that torque bar alignment pin openings 522 extend from inboard surface 514 to outboard surface 516 of flange 512. Torque bar alignment pin openings 522 are configured to receive a first end 519 of torque bar 515 and an inboard end 531 of alignment pin 530, such that alignment pins 530 may be axially aligned with torque bars 515.

In various embodiments, torque bar alignment pin opening 522 may be configured (e.g., a diameter of torque bar alignment pin opening 522 may be selected) such that alignment pin 530 may be press fit into flange 512. In this regard, frictional force may secure alignment pin 530 to flange 512. In various embodiments, a bushing 524 may be located around first end 519 of torque bar 515, within torque bar alignment pin opening 522. Stated differently, bushing 524 may be between first end 519 of torque bar 515 and flange 512.

Outboard wheel half 502 includes an outboard surface 542 and an inboard surface 544 opposite outboard surface 542. Inboard surface 544 is oriented toward outboard surface 516 of inboard wheel half 500, when outboard wheel half 502 is secured to inboard wheel half 500. Outboard wheel half 502 defines a plurality of fastener openings 550 and a plurality of alignment pin openings 552. Fastener openings 550 are configured to axially align with fastener openings 520 in inboard wheel half 500. Alignment pin openings 552 are configured to axially align with torque bar alignment pin openings 522 in inboard wheel half 500 and to receive an outboard end 532 of alignment pin 530. In this regard, alignment pin opening 552 and torque bar alignment pin opening 522 together define a volume configured to receive alignment pin 530.

In various embodiments, not every torque bar alignment pin opening 522 includes both a torque bar 515 and an alignment pin 530 located therein. For example, one or more of the torque bar alignment pin openings 522 may have a torque bar 515 located therein, without an alignment pin 530. The number and configuration of alignment pin openings 552 in outboard wheel half 502 may be selected to correspond with the number of alignment pins 530 included in wheel assembly 501. In various embodiments, the number of alignment pin openings 552 in outboard wheel half 502 may be less than the number torque bar alignment pin openings 522 in inboard wheel half. For example, inboard surface 544 of outboard wheel half 502 may cover, or be located axially over, one or more torque bar alignment pin openings 522 formed in flange 512. In this regard, with momentary reference to FIGs. 2A, 2C, and 2E, in various embodiments, inboard surface 244 of outboard wheel half 202 may cover, or be located axially over, one or more of the openings in flange 212 that receive torque bars 215.

Returning to FIGs. 5A and 5B, alignment pin openings 552 may extend completely through outboard wheel half 502, such that alignment pin openings 552 extend from outboard surface 542 to inboard surface 544. Alignment pin opening 552 may be configured (e.g., a diameter may be selected) such that alignment pin 530 may be slip fit into outboard wheel half 502. In this regard, alignment pin 530 may be in contact with the surface defining alignment pin opening 552, but the frictional force between outboard wheel half 502 and alignment pin 530 may be less than the frictional force between flange 512 and alignment pin 530, thereby allowing alignment pin 530 to slide in and out alignment pin opening 552. In various embodiments, outboard end 532 of alignment pin 530 may be press fit in outboard wheel half 502 and inboard end 531 may be slip fit in flange 512. When outboard wheel half 502 is secured to inboard wheel half 500, alignment pins 530 engage inboard wheel half 500 and outboard wheel half 502. Alignment pins 530 engaging both inboard wheel half 500 and outboard wheel half 502 may prevent or reduce lateral sliding/movement of the wheel halves relative to one another. In this regard, alignment pins 530 tend to reduce fastener joint movement and/or a loosening of nuts and bolts.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A wheel assembly (401), comprising:
an inboard wheel half (400) including a flange (412), the flange (412) defining a first alignment pin opening (422); and
an outboard wheel half (402) defining a second alignment pin opening (452), wherein the first alignment pin opening (422)) and the second alignment pin opening (452) define a volume configured to receive an alignment pin (430).

2. The wheel assembly of claim 1, further comprising the alignment pin (430) located in the first alignment pin opening (422) and the second alignment pin opening (452).

3. The wheel assembly of claim 2, wherein an axial length of the alignment pin (430) is between 45% and 80% of an axial length extending from an inboard surface of the flange (412) to an outboard surface of the outboard wheel half (402).

4. The wheel assembly of claim 2, wherein a first end of the alignment pin (430) is press fit into at least one of the flange (412) or the outboard wheel half, and preferably wherein a second end of the alignment pin (430) opposite the first end of the alignment pin (430) is slip fit into at least one of the flange (412) or the outboard wheel half (402).

5. The wheel assembly of any preceding claim, further comprising a torque bar coupled to the inboard wheel half (400), wherein an end of the torque bar is located in the first alignment pin opening (422).

6. The wheel assembly of any preceding claim, wherein at least one of the first alignment pin opening (422) or the second alignment pin opening (452) is a stepped alignment pin opening.

7. The wheel assembly of any of claims 1 to 5, wherein at least one of the first alignment pin opening (422) or the second alignment pin opening (452) is a blind alignment pin opening.

8. The wheel assembly of any preceding claim, further comprising a fastener coupling the inboard wheel half (400) to the outboard wheel half (402), and preferably wherein the fastener comprises:
a bolt extending through the flange and the outboard wheel half; and
a nut engaging the bolt.

9. A wheel assembly for an aircraft, comprising:
an inboard wheel half (400) including a flange (412), the flange (412) defining a first alignment pin opening (422);
an outboard wheel half (402) defining a second alignment pin opening (452);
an alignment pin (430) located in the first alignment pin opening (422) and the second alignment pin opening (452), wherein an axial length of the alignment pin (430) is equal to or less than an axial length extending from an inboard surface of the flange (412) to an outboard surface of the outboard wheel half (402); and
a fastener located through the flange (412) and the outboard wheel half (402).

10. The wheel assembly of claim 9, wherein the first alignment pin opening (422) extends from the inboard surface of the flange (412) to an outboard surface of the flange (412) opposite the inboard surface of the flange (412).

11. The wheel assembly of claim 9 or 10, wherein at least one of the first alignment pin opening (422) or the second alignment pin opening (452) is a blind alignment pin opening.

12. The wheel assembly of claim 9 or 10, wherein at least one of the first alignment pin opening (422) or the second alignment pin opening (452) is a stepped alignment pin opening.

13. The wheel assembly of any of claims 9 to 12, further comprising a torque bar coupled to the inboard wheel half (400), wherein the alignment pin (430) is axially aligned with the torque bar, or wherein the fastener comprises a bolt and a nut engaging the bolt.

14. A wheel assembly for an aircraft, comprising:
at least one of an inboard wheel half (400) or an outboard wheel half (402);
an alignment pin opening (422) defined by the at least one of the inboard wheel half (400) or the outboard wheel half (402);
a first fastener opening circumferentially adjacent to the alignment pin opening (422) and defined by the at least one of the inboard wheel half (400) or the outboard wheel half (402); and
a second fastener opening circumferentially adjacent to the first fastener opening and defined by the at least one of the inboard wheel half (400) or the outboard wheel half (402), wherein a circumferential distance between the alignment pin opening (422) the first fastener opening is less than a circumferential distance between the first fastener opening and the second fastener opening.

15. The wheel assembly of claim 14, wherein the alignment pin opening (422) is at least one of a blind alignment pin opening or a stepped alignment pin opening, or further comprising an alignment pin press fit into the at least one of the inboard wheel half or the outboard wheel half (402), or further comprising a torque bar, wherein an end of the torque bar is located within the alignment pin opening.
